(19) Europäisches Patentamt

European Patent Office

Office européen des brevets

(11) Publication number: **0 195 545 A2**

(12) **EUROPEAN PATENT APPLICATION**

(21) Application number: 86301480.9

(22) Date of filing: 03.03.86

(51) Int. Cl.⁴: **D04H 13/00** , A62C 7/00

(30) Priority: 05.03.85 GB 8505660

(43) Date of publication of application:
24.09.86 Bulletin 86/39

(84) Designated Contracting States:
AT BE CH DE FR GB IT LI LU NL SE

(71) Applicant: **Early's of Witney plc**
**Witney Mill**
**Witney Oxfordshire OX8 5EB(GB)**

(72) Inventor: **Whitelegg, John Richard**
**Early's of Witney plc Witney Mill**
**Witney Oxfordshire OX8 5EB(GB)**

(74) Representative: **McNeight, David Leslie et al**
**McNeight & Lawrence Regent House Heaton Lane**
**Stockport Cheshire SK4 1BS(GB)**

(54) **Fire barrier material.**

(57) A fire barrier material suitable for fire blankets has a low permeability layer of e.g. fire retardent p.v.c. between layers of textile fibre material such as fire retardent acrylic fibre. The textile layers can be tack needled cross-folded card web and the layers can be connected by needle punching.

EP 0 195 545 A2

requires the blanket to withstand a volatile solvent fire (n-heptane) after a one minute build up. The blanket constructed as herein described also resists a 450°C hot nut contact.

Of course, other fire retardant fibres and methods of assembly can be used than those specifically mentioned. For example, fire retardant viscose in a stitch bonded construction. Similarly other low permeability fibres may be used for example a metal foil or a metallised fire retardant polyester sheet can be substituted for the p.v.c.

Other methods for connecting the layers together could also be used provided that the connection did not involve unacceptable increase in permeability of the low permeability layer and could withstand the heat from a fire being extinguished.

Other methods for connecting the layers together could also be used provided that the connection did not involve unacceptably high permeability of the low permeability layer, could withstand the heat from a fire being extinguished, and would not adversely affect the drape of the material.

**Claims**

1. A fire barrier material suitable for a fire blanket comprising a low permeability layer interposed between two textile layers.

2. A fire barrier material according to claim 1, in which said low permeability layer is of a non-permeable material, and the said fire barrier material is formed by connecting the layers together by a method involving some penetration of the non-permeable material insufficient to result in an unacceptable permeability.

3. A fire barrier material according to claim 1 or claim 2, in which the low permeability layer comprises a layer of film.

4. A fire barrier material according to any one of claims 1 to 3, in which the textile layers comprise needled fibre webs.

5. A fire barrier material according to any one of claims 1 to 4, in which the layers are connected together by needling fibres across the low permeability layer.

6. A fire barrier material according to claim 5, in which the needling is effected inclined with regard to the surface of the material.

7. A fire barrier material according to any one of claims 1 to 6, whereof the textile layers comprise fire retardant fibres.

8. A fire barrier material according to claim 7, in which said fibres comprise a fire retardant acrylic copolymer.

9. A fire barrier material according to any one of claims 1 to 8, in which said low permeability layer comprises a fire retardant layer.

10. A fire barrier material according to claim 9, in which said fire retardant layer comprises fire retardant polyvinyl chloride sheet.

11. A method for making a fire barrier material suitable for a fire blanket comprising interposing a low permeability layer between two textile layers and connecting the layers together.

12. A method according to claim 11, comprising connecting the layers together by needling in such a way that the permeability of the low permeability layer is not substantially affected.

13. A method according to claim 13, in which the layers are connected together by needling at an angle inclined to the surface of the material.

14. A fire blanket made from material according to any one of claims 1 to 10.

15. A fire blanket substantially as hereinbefore described with reference to the accompanying drawings.

16. A method for making a fire barrier material suitable for a fire blanket substantially as hereinbefore described with reference to the accompanying drawings.

FIRE BARRIER MATERIAL

This invention relates to fire barrier materials suitable for fire blankets and methods for making the same.

Fire blankets have been made of various materials including asbestos, leather and textiles such for example as woven glass fibre fabrics. Leather is very effective, but expensive, and somewhat heavy, hampering deployment with a blanket of any size. Asbestos certainly does not itself burn, but has limited effectiveness as a fire barrier and in any event is itself a hazardous material.

Textile fire blankets meet the need for flexibility (drape) and relative lightness of weight, and are not dangerous of themselves (although glass fibre is an irritant) but have not been really effective, especially against fiercer fires. Aside from glass, which of course, does not burn at all, there have in recent years been developed numerous fire retardant textile fibres, made by modifying standard fibres like polyester, polyamide and acrylic fibres by including substances such as phosphorus, halides and heavy metals such as zinc or by other means.

Although these modified fibres are very effective at resisting burning and sometimes act synergistically to generate a smothering gas or vapour, nevertheless, no really effective fire blanket has yet been made from them that can reliably bring under control a fire such as a chip pan fire.

The present invention provides an improved, textile-based fire barrier material suitable for a fire blanket which can for example readily extinguish a chip pan fire.

The invention comprises a fire barrier material suitable for a fire blanket comprising a low permeability layer interposed between two textile layers.

Clearly a non-permeable layer is entirely satisfactory, but it may be problematical to consolidate a non-permeable layer with textile layers without perforating the same. We have found that the layers may be connected together, even if an intermediate non-perforable layer is used, by a method involving perforation of the same, in such fashion that the permeability remains low for present purposes.

The low permeability layer may comprise a layer of film. The textile layers may comprise needled fibre webs.

Surprisingly, the layers can be connected together by needling across the low permeability layer -even where this is a film -without detracting from the performance of the material. Such connecting needling may be effected at an angled inclined to the surface of the material.

The textile layers may comprise fire retardant fibre such for example as a fire retardant cross-linked polyacrylate such as that sold under the trade name INIDEX by Courtaulds Plc. The low permeability layer may also comprise a fire retardant layer such for example as a fire-retardant polyvinyl chloride sheet.

The invention also comprises a method for making a fire barrier material suitable for a fire blanket comprising interposing a low permeability layer between two textile layers and connecting the layers together.

The method may comprise connecting said layers together by needling. A needled assembly, we have found, may, despite the needling, have a layer between the two textile layers which is of said low permeability as to constitute an effective fire barrier material. The layers may be connected together by needling at an angle inclined to the surface of the material, for example in a Fibrewoven loom.

The invention also comprises a fire blanket made from the material of the invention.

In tests, material and fire blankets made of it according to the invention have readily put out chip pan fires. It is believed that conventional textile fire blankets are relatively ineffective because, although a fire may be contained for a while, if there are hot, flammable vapours associated with the fire, they penetrate through the conventional blanket and reignite on the other side.

Embodiments of fire barrier materials and blankets made from them as well as methods for making the same will now be described with reference to the accompanying drawings, in which:

Figure 1 is a diagrammatic cross-section through a material according to the invention,

Figure 2 is a plan view of a film layer of said fabric, which is about 1/10" square (2.5mm X 2.5mm),

and Figure 3 is a diagrammatic illustration of a needling operation for making said material.

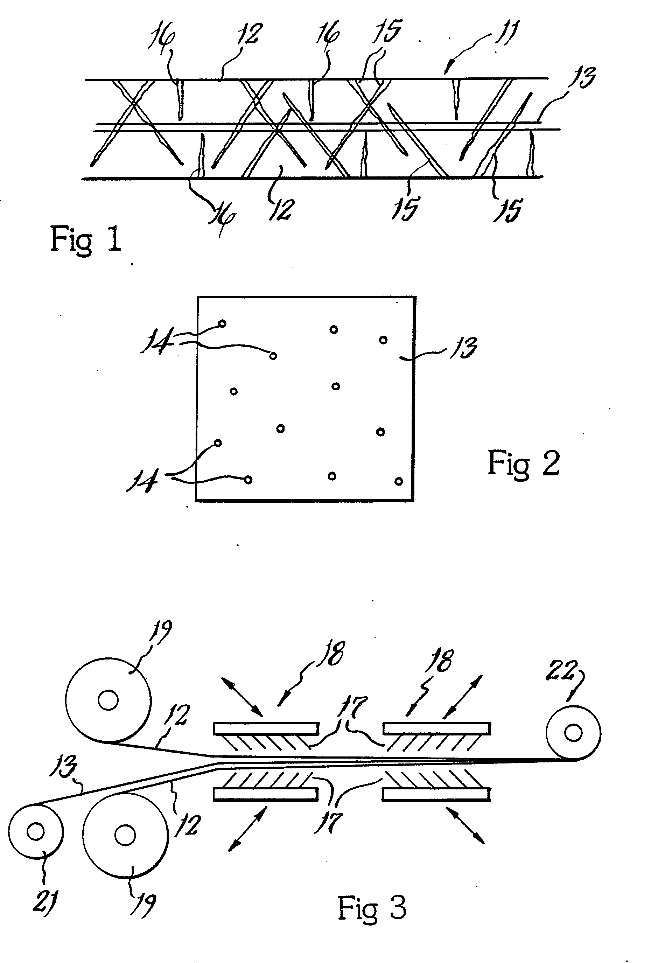

The fire barrier material 11 illustrated in Figure 1 comprises outer layers 12 of needled, cross-laid card web of a fire retardant fibre such as a fire retardant cross-linked polyacrylate such as INIDEX of Courtaulds Plc. Between said outer layers 12 is a low permeability layer 13 of fire retardant polyvinyl chloride sheet.

The layers are needled together with about 1400 penetrations/sq. in. (about 230/sq. cm) from each side - (about 2800/sq. in. or 480/sq. cm altogether). Other levels of needling will be found to give acceptable results.

On separating the layers 12, 13 -which is achieved only with some difficulty -the p.v.c. sheet 13 can be seen to have been penetrated with needle holes 14 (Figure 2). It appears that the resulting permeability of this sheet 13 is still sufficiently low however, that the material as a whole constitutes an effective fire blanket possibly because needle holes are blocked by fibre plugs 15 passing from each of the outer layers into entanglement with fibres of the other on the opposite side of the layer 13.

These plugs 15 are seen in Figure 1 to be inclined with respect to the surface of the material 11. This has been brought about by the method of needling in a Fiberwoven loom (Figure 3), which uses inclined barbed needles 17 penetrating the assembly of layers 12, 13 from both sides. Further fibre plugs 16 are the result of earlier tack bonding of the cross-laid card web, and do not penetrate the layer 13.

The loom 18 is fed from rolls of tack-needled cross-laid card web 19 and a roll 21 of p.v.c. sheet. The finished product is rolled-up as at 22.

A typical weight for the finished product is 425 g/m² with a thickness of 2.8mm.

In air permeability trials carried out according to British Standard 5636 of 1978, conventional needle punched textile blanket material had air permeabilities in the range 35.7 to 45.2 cm³/cm²/s. A conventional glass fibre fire blanket had a permeability of 10.0 cm³/cm²/s. A blanket constructed according to the invention had a permeability, however, as low as 5.8 cm³/cm²/s, and passes BS 6575 of 1985 (light duty) which requires extinguishing a cooking oil fire that has been burning for 2 minutes (and so the flames may have reached a temperature of about 700°C). The test also

Fig 1

Fig 2

Fig 3